# FASCICULE DE BREVET EUROPEEN

(11) **EP 2 129 449 B1**
(45) Date de publication et mention de la délivrance du brevet: **08.04.2015**
(21) Numéro de dépôt: 07872035.6
(22) Date de dépôt: 27.12.2007
(51) Int. Cl.: B01D 53/04, B01D 53/26

(54) **PROCÉDÉ ET INSTALLATION DE PURIFICATION OU DE SÉPARATION UTILISANT PLUSIEURS ADSORBEURS DÉCALÉS EN PHASE**
VERFAHREN UND VORRICHTUNG ZUR REINIGUNG ODER TRENNUNG MIT MEHREREN PHASENVERSCHOBENEN ADSORPTIONSEINHEITEN
PURIFICATION OR SEPARATION PROCESS AND PLANT USING SEVERAL OUT-OF-PHASE ADSORBERS

(30) Priorité: 05.01.2007 FR 0752531
(43) Date de publication de la demande: 09.12.2009
(73) Titulaire: L'AIR LIQUIDE, Société Anonyme pour l'Etude et l'Exploitation des Procédés Georges Claude, 75007 Paris (FR)
(72) Inventeur: MONEREAU, Christian, F-75011 Paris (FR); BELLEC, Ingrid, F-91360 Epinay Sur Orge (FR)
(74) Mandataire: Conan, Philippe Claude
(86) Numéro de dépôt international: PCT/FR2007/052627
(87) Numéro de publication internationale: WO 2008/087363

(56) Documents cités:
- EP-A- 0 305 919
- EP-A1- 0 903 171
- EP-A1- 0 978 305
- EP-A1- 1 004 343
- WO-A-03/049839
- FR-A1- 2 806 321
- FR-A1- 2 841 152

## Description

L'invention porte sur un procédé et une installation de séparation ou de purification d'un gaz mettant en oeuvre une pluralité d'adsorbeurs qui suivent des cycles déphasés, et plus particulièrement sur la purification d'air atmosphérique, avant séparation cryogénique dudit air par distillation cryogénique. Plus particulièrement encore, cela concerne la purification d'air par cycle TSA au moyen d'adsorbeurs radiaux.

Il est connu que l'air atmosphérique contient des composés devant être éliminés avant l'introduction dudit air dans les échangeurs thermiques de la boîte froide d'une unité de séparation d'air, notamment les composés dioxyde de carbone (CO₂), vapeur d'eau (H₂O), oxydes d'azote et/ou hydrocarbures par exemple.

En effet, en l'absence d'un tel prétraitement de l'air pour en éliminer ses impuretés CO₂ et eau, on assiste à une solidification en glace de ces impuretés lors du refroidissement de l'air à température cryogénique typiquement inférieure ou égale à -150°C, d'où il peut résulter des problèmes de colmatage de l'équipement, notamment les échangeurs thermiques, des colonnes de distillation...

En outre, il est également d'usage d'éliminer au moins partiellement les impuretés hydrocarbures et oxydes d'azote susceptibles d'être présentes dans l'air afin d'éviter leur trop forte concentration dans le bas de la ou des colonnes de distillation, et de pallier ainsi tout risque de dégradation des équipements.

Actuellement, ce prétraitement de l'air est effectué, selon le cas, par procédé TSA (Temperature Swing Adsorption = adsorption avec variation de température) ou par procédé PSA (Pressure Swing Adsorption = adsorption à pression modulée) ; par procédé PSA, on entend les procédés PSA proprement-dits, les procédés VSA (Vacuum Swing Adsorption = adsorption à pression modulée avec mise sous vide), les procédés VPSA et analogues.

L'invention s'applique aux divers procédés et unités mettant en oeuvre des adsorbeurs radiaux, fonctionnant en mode TSA, c'est-à-dire avec augmentation de température lors de la régénération.

Classiquement, un cycle de procédé TSA de purification d'air comporte les étapes suivantes:
a) purification de l'air par adsorption des impuretés à pression super-atmosphérique et à température ambiante,
b) dépressurisation de l'adsorbeur jusqu'à la pression atmosphérique,
c) régénération de l'adsorbant à pression atmosphérique, notamment par les gaz résiduaires, typiquement de l'azote impur provenant d'une unité de séparation d'air et réchauffé jusqu'à une température habituellement entre 100 et 250°C au moyen d'un ou plusieurs échangeurs thermiques,
d) refroidissement à température ambiante de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération.

La phase de production correspond à la purification du mélange gazeux par adsorption des impuretés.

La phase de régénération correspond à la désorption des impuretés, retenues sur l'adsorbant pendant l'étape d'adsorption, par chauffage de l'adsorbant par les gaz résiduaires réchauffé à une température comprise entre 100°C et 250°C. Elle comprend les étapes de dépressurisation, chauffage, refroidissement et repressurisation.

Une étape de mise en parallèle des deux adsorbeurs, de durée plus ou moins longue, c'est-à-dire de quelques secondes à plusieurs minutes, est généralement rajoutée au début ou en fin de phase de régénération.

De tels procédés TSA de purification d'air sont notamment décrit dans les documents US-A-3738084 et FR-A-7725845.

Dès lors que les débits à purifier deviennent importants, il est connu d'utiliser des adsorbeurs radiaux tel qu'il est enseigné dans le document US-A-4-541-851 ou dans le brevet EP-A-1,638,669.

Les adsorbeurs radiaux permettent de réaliser de façon fiable et répétée une épuration par adsorption de grandes quantités de fluide, notamment d'air atmosphérique, tout en conservant une bonne distribution du fluide traité et des vitesses de circulation des fluides compatibles avec les propriétés mécaniques des particules d'adsorbant utilisées.

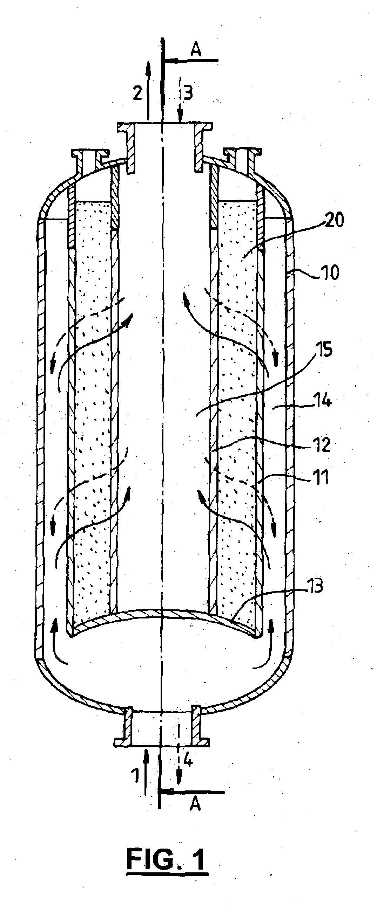

Le fonctionnement d'un adsorbeur radial est représenté figure 1.

Le fluide à épurer ou à séparer rentre en partie basse de l'adsorbeur radial 10, traverse la masse adsorbante 20 de manière centripète ou centrifuge selon le cas, et le produit sort en partie supérieure 2. Lors de la régénération, le fluide de régénération 3 rentre à contre-courant par la partie haute, désorbe les impuretés contenues dans la masse adsorbante 20 et le gaz résiduaire 4 sort en partie basse.

L'adsorbeur lui-même 10 est constitué d'une virole cylindrique d'axe vertical AA et de 2 fonds. La masse adsorbante est maintenue en place au moyen d'une grille externe perforée 11 et d'une grille interne également perforée 12 fixées sur le fond supérieur et d'une tôle pleine 13 en partie inférieure. Le gaz 1 circule verticalement à là périphérie dans la zone libre externe 14 entre la virole cylindrique et la grille externe, traverse radicalement la masse adsorbante 20 puis circule verticalement dans la zone libre interne 15 avant de quitter l'adsorbeur par le haut. La régénération s'effectue en sens inverse.

Dans la description ci-dessus, le gaz à épurer pendant la phase d'adsorption circule de la périphérie vers le centre : on parle alors de circulation centripète en adsorption. La régénération correspondante s'effectue alors de façon centrifuge, c'est-à-dire du centre vers l'extérieur. Ceci est la configuration la plus générale mais on peut utiliser de la même façon les adsorbeurs radiaux avec des sens de circulation inverses, c'est-à-dire qu'en adsorption par exemple le gaz à traiter ira de l'intérieur vers l'extérieur alors qu'en régénération, le gaz de régénération circulera de l'extérieur vers l'intérieur. Un autre arrangement possible consiste à rajouter un disque circulaire d'étanchéité pour fractionner en 2 parties la masse adsorbante. Il est alors possible dans un même adsorbeur radial d'avoir en phase d'adsorption par exemple une circulation centrifuge dans un premier volume d'adsorbant suivie d'une circulation centripète dans le volume supérieur d'adsorbant.

Pour les équipements voisins des adsorbeurs radiaux que sont les colonnes à distiller, les réacteurs cylindriques, les adsorbeurs à lits superposés standards c'est à dire cylindrique à axe vertical, les capacités et réservoirs essentiellement cylindriques, le coût varie classiquement comme environ la taille (le volume ou la quantité de fluide à traiter) à la puissance 0.7 à 0.9, généralement autour de 0.8 en moyenne , ce qui fait qu'il est plus intéressant économiquement de construire une grosse unité que deux unités de taille moitié.

Si on considère un adsorbeur classique de type cylindrique à axe vertical, il convient, si on veut augmenter le débit de gaz de charge à efficacité constante, c'est-à-dire essentiellement à même pertes de charge, d'augmenter la section de passage tout en conservant la même hauteur d'adsorbant. Toutefois, la réalisation d'adsorbeurs cylindrique à axe vertical de diamètre élevé entraîne des problèmes de volumes morts et de distribution gazeuse.

Les adsorbeurs cylindriques à axe horizontal, quant à eux, permettent d'extrapoler vers les gros débits en rajoutant des tronçons de virole. Cependant, ce type d'adsorbeur largement utilisé présente des inconvénients tels que la distribution gazeuse au sein de la masse adsorbante du fait de trajets plus longs le long de la virole ou que les déperditions thermiques importantes dues à la grande surface d'échange entre l'adsorbant et le milieu extérieur.

Dans ce contexte, les adsorbeurs radiaux ont comme particularité d'être extrapolables facilement en taille et de pouvoir être utilisés pour traiter des débits de gaz très élevés. Contrairement à la majorité des équipements traitant des fluides, une augmentation de débit entraîne essentiellement une augmentation de la hauteur de l'équipement et non de son diamètre.

De là, il est courant dans l'état de la technique d'augmenter la taille des adsorbeurs radiaux quand on augmente les débits à purifier.

Par exemple, un adsorbeur radial de 3 mètres de diamètre et 7 mètres de haut pourra traiter 200 000Nm³/h d'air à température ambiante et à 6 bar absolus. Pour traiter un débit double soit 400 000Nm³/h avec les mêmes performances, on pourra utiliser un adsorbeur de 3.75m de diamètre et 11 à 12 mètres de haut. On augmente seulement de 25% le diamètre mais de plus de 60% la hauteur.

Il n'y a pas d'objection technique à réaliser des adsorbeurs de l'ordre de 6 à 7 mètres de diamètre et de 20 à 30m de haut. A titre de comparaison, il existe des réacteurs ou des colonnes à distiller de cette taille ou de taille supérieure.

Toutefois, à l'intérieur d'un adsorbeur radial, le gaz circule à la fois longitudinalement dans les espaces de distribution externe et interne et radialement dans la masse adsorbante. Ce double trajet conduit à des problèmes de distribution gazeuse lorsqu'on augmente la taille des adsorbeurs radiaux. La perte de charge variant essentiellement comme le carré de la vitesse, la variation de pression entre le haut et le bas de l'adsorbeur serait environ 8 fois supérieure pour l'adsorbeur de capacité double si on maintenait le même diamètre de virole avec, en effet, un facteur multiplicateur de 4 correspondant au doublement du débit, et un facteur 2 correspondant au doublement du trajet. Pour maintenir une distribution gazeuse correcte à travers le lit adsorbant sur toute la hauteur de l'adsorbeur, il convient donc d'agrandir la section de passage extérieure d'un facteur supérieur à 2.

Cela se traduit globalement par le fait que le volume imparti aux zones de distribution du gaz (volume libre interne et externe) augmente plus que le rapport de l'augmentation des débits. Par conséquent, le volume total de l'adsorbeur, c'est-à-dire volume de la masse adsorbante et volumes de distribution, augmente lui aussi plus que le simple rapport des débits.

Ainsi, traiter des débits importants en augmentant la taille des adsorbeurs conduit à des problèmes de perte de charge, de distribution gazeuse qui entraînent un grossissement du diamètre et, par là, un accroissement du volume et du poids qui pénalise la manutention.

On notera toutefois qu'il ne s'agit pas d'installer une pluralité d'adsorbeurs radiaux de petite taille, c'est-à-dire d'installer par exemple plusieurs adsorbeurs de 2 mètres de diamètre à la place d'un adsorbeur de 4 mètres de diamètre. En effet un adsorbeur de 4 mètres de diamètre est encore facile à manipuler et constructible dans un grand nombre d'ateliers. Le gain en volume ne suffit pas à lui tout seul pour remplacer un adsorbeur de taille moyenne par plusieurs petits adsorbeurs. C'est une des raisons pour lesquelles le problème évoqué précédemment n'avait pas été mis en évidence jusqu'ici.

En définitive, l'augmentation de la taille des adsorbeurs radiaux au-delà d'un diamètre de 4 mètres, lorsque le débit à épurer augmente n'est pas la meilleure solution technique et économique à adopter.

L'utilisation de procédés comportant un plus grand nombre d'adsorbeurs telle que pratiquée à ce jour ne répond pas non plus au problème soulevé ici. Il est connu d'effectuer des cycles d'épuration de type TSA comportant une période d'adsorption et une période de régénération et mettant en oeuvre 3 adsorbeurs.

Le premier cas consiste à utiliser un adsorbeur en épuration et deux adsorbeurs en régénération. Un exemple de ce fonctionnement correspond au séchage et à l'arrêt des constituants acides (CO₂, H₂S) du gaz naturel. Un schéma d'un tel procédé peut être trouvé par exemple dans le chapitre 11.2 (page 359) de « Principles of Adsorption and Adsorption Processes » de D.M. Ruthven. Un tel cycle permet de disposer d'une durée double pour régénérer par rapport à une unité classique qui ne comporterait que deux adsorbeurs, à durée d'adsorption fixée. Cela permet essentiellement de minimiser le débit de gaz nécessaire à la régénération.

Le second cas qui peut se présenter correspond à l'inverse : deux adsorbeurs en adsorption et un adsorbeur en régénération. C'est le cas en particulier quand la cinétique d'adsorption est lente et qu'il faut des volumes important d'adsorbant pour arrêter une impureté.

La période de régénération pour une unité d'épuration de type TSA comprend une étape de chauffage, pratiquement toujours une étape de refroidissement et éventuellement des étapes de dépressurisation, repressurisation si la régénération s'effectue à une pression différente de celle de l'adsorption et/ou de mise en parallèle de l'adsorbeur régénéré avec l'adsorbeur en fin d'étape d'adsorption. Cette mise en parallèle peut durer de quelques secondes, s'il s'agit juste d'assurer la continuité de la production pendant l'ouverture/fermeture des vannes d'alimentation et production des dits adsorbeurs, ou quelques minutes à dizaines de minutes, s'il s'agit de stabiliser les températures ou composition de la bouteille régénérée. Cette mise en parallèle peut correspondre à la circulation de débit moitié dans chacun des deux adsorbeurs ou à des pourcentages différents suivant les adsorbeurs. De façon générale, on appelle étape de mise en parallèle une étape durant laquelle le gaz à épurer alimente au moins deux adsorbeurs qui n'en sont pas au même point du cycle, par exemple un adsorbeur en fin de phase de production et un adsorbeur qui vient d'être régénéré et repressurisé.

Globalement pour de tels cycles, la durée de la période d'adsorption est différente de la durée de la période de régénération.

Pour décrire plus précisément les cycles d'adsorption, on utilise la notion de temps de phase Δϕ et de temps de cycle T.

Un cycle comportant n adsorbeurs comporte n phases de durée égale Δϕ et le temps de cycle T, qui correspond au temps nécessaire pour qu'un adsorbeur revienne au même point du cycle de pression, est alors égal à n temps de phase Δϕ.

Partant de là, un problème qui se pose est d'améliorer les procédés et les unités de traitement du gaz à adsorbeurs radiaux lorsque les débits volumiques à traiter deviennent importants, typiquement d'au moins 100 000 m³/h.

La solution de l'invention est un procédé de purification ou de séparation, fonctionnant en mode TSA, d'un mélange gazeux à au moins deux constituants, dans lequel on met en oeuvre n adsorbeurs radiaux avec n ≥ 4, chaque adsorbeur étant soumis à un cycle de pression de durée T donnée comprenant une période de production et une période de régénération, caractérisé en ce que les cycles de pression de tous les adsorbeurs sont décalés les uns par rapport aux autres d'une durée de décalage x.Δϕ avec 1 ≤ x ≤ (n-1), et Δϕ = T / n où Δϕ désigne le temps de phase, et à chaque instant du cycle de pression au moins deux adsorbeurs se trouvent en phase d'adsorption.

Selon le cas, le procédé selon l'invention peut présenter l'une des caractéristiques suivantes :
- périodiquement au moins trois adsorbeurs se trouvent à un instant donné en phase d'adsorption ;
- le procédé de purification met en oeuvre n adsorbeurs radiaux avec n = 4 ou 6 suivant un cycle comportant n/2 phases de production et n/2 phases de régénération ;
- le procédé de purification met en oeuvre 5 adsorbeurs suivant un cycle comportant trois phases de production et deux phases de régénération ou deux phases de production et trois phases de régénération ;
- on met en oeuvre un réchauffeur en fonctionnement continu, pendant la période de régénération d'un adsorbeur ;
- la durée de chauffage pour régénérer un adsorbeur est environ égale à un temps de phase Δϕ ;
- on met en oeuvre pendant l'étape de chauffage de la période de régénération un débit de gaz de chauffage différent du débit de gaz de refroidissement utilisé en fin de période de régénération ;
- les débits de gaz de chauffage et de refroidissement traversant un adsorbeur donné sont modifiés au cours du cycle ;
- le temps de phase est compris entre 15 et 90 minutes ;
- le débit volume horaire de gaz à traiter de l'unité d'adsorption est supérieur à 100 000 m³/h ;
- la pression du gaz à traiter est comprise entre 2 et 35 bar, de préférence entre 3 et 8 bar absolu ;
- la durée d'un cycle est comprise entre 90 et 600 minutes ;
- le mélange gazeux est de l'air et en ce que le dioxyde dé carbone et l'eau contenu dans l'air sont éliminés dans la période de production ;
- le mélange gazeux contient majoritairement du CO₂ et au moins une impureté, en particulier de l'eau et/ou des oxydes d'azote et/ou des produits soufrés ;
- chaque adsorbeur contient de l'alumine activée et/ou de la zéolite et/ou du gel de silice et/ou du charbon actif en tant qu'adsorbant ;
- le gaz issu de la période de production subit une distillation cryogénique.

L'invention porte également sur une installation de purification et de séparation d'un mélange gazeux, comprenant n adsorbeurs radiaux avec n ≥ 4, chaque adsorbeur fonctionnant en mode TSA et étant soumis à un cycle de pression comprenant une période de production et une période de régénération, caractérisé en ce que chaque adsorbeur est alimenté par une ou plusieurs canalisations, reliées à une source de gaz à purifier et à une source de gaz de régénération et équipées de vannes propres dont l'ouverture et la fermeture sont pilotées à l'aide d'un dispositif de pilotage, de manière à ce que les cycles de pression de tous les adsorbeurs sont décalés les uns par rapport aux autres d'une durée x.Δϕ avec 1≤ x ≤ (n-1) et Δϕ = T / n, et à chaque instant du cycle de pression au moins deux adsorbeurs se trouvent en phase d'adsorption.

De préférence, la hauteur de la virole de chaque adsorbeur est supérieure à 10 mètres, de préférence comprise entre 12 et 25 mètres, et/ou chaque adsorbeur a un diamètre compris à 4 et 6.5 mètres.

A partir du constat que grossir la taille d'un adsorbeur radial posait des problèmes inhérents à cette technologie, à savoir que cela augmentait le pourcentage des volumes morts dédiés à la distribution gazeuse par rapport au volume utile, l'invention repose sur l'utilisation d'une pluralité d'adsorbeurs de taille inférieure et plus précisément sur leur agencement en un cycle de pression et température conduisant à des améliorations par rapport à la solution proposée dans l'art antérieur, celles-ci venant en plus du gain sur l'investissement relatif à la diminution du volume global des adsorbeurs.

Dans un mode simple et préférentiel, selon l'invention, on remplace 2 adsorbeurs suivant un cycle à 2 phases par 4 adsorbeurs de volume global inférieur suivant un cycle à 4 phases tel que la durée totale du cycle et le volume total d'adsorbant soit essentiellement identiques.

Plus généralement, on passe d'une unité à n adsorbeurs à une unité à N=2n adsorbeurs en conservant le volume total d'adsorbant et les performances, y compris les pertes de charge en adsorption et régénération.

L'invention va être décrite plus en détail, en référence aux figures annexées 2 et 3 données à titre illustratif.

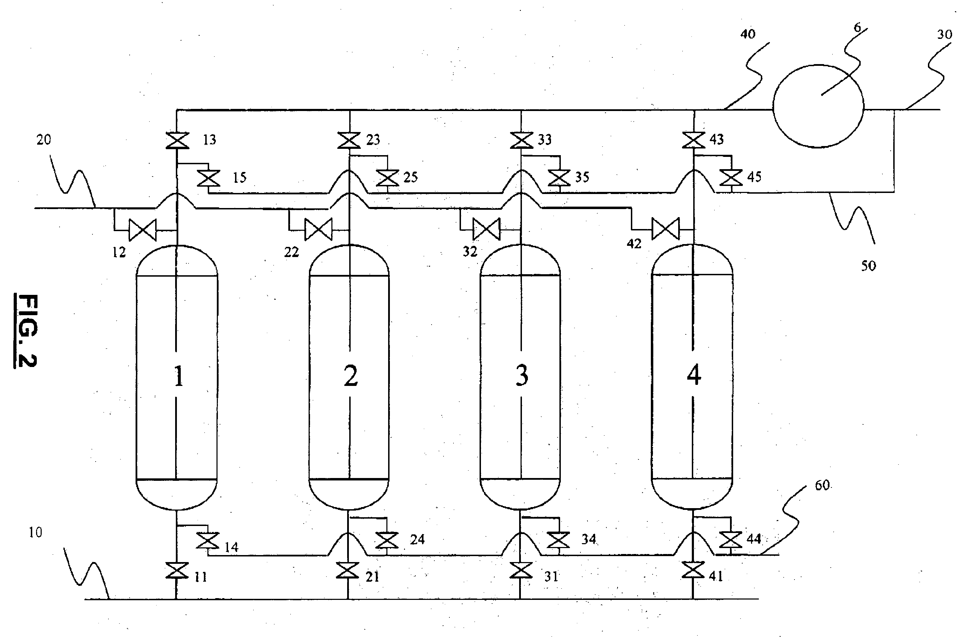

Une forme de réalisation selon l'invention va être décrite au moyen de la figure 2 représentant une unité d'épuration à 4 adsorbeurs radiaux avec donc un cycle comportant 4 phases dont 2 phases en adsorption et deux phases en régénération.

Pour une meilleure compréhension, on suppose que l'adsorbeur radial 1 commence la première phase d'adsorption et que l'adsorbeur radial 2 commence la deuxième phase d'adsorption.

Le gaz à épurer 10 alimente en parallèle les adsorbeurs 1, 2 via les vannes 11 et 21. Le gaz purifié 20 est collecté via les vannes 12 et 22. Pendant le même temps, l'adsorbeur 3 qui a terminé sa période de production est isolé des circuits principaux par fermeture des vannes 31 et 32, puis est dépressurisé via la vanne 34, puis commence la période de régénération. Pendant cette étape, le gaz de régénération 30 est, pour une partie 40, chauffé dans le réchauffeur de régénération 6 puis circule dans l'adsorbeur 3 via les vannes 33 et 34.

Simultanément pendant la même période de temps, l'adsorbeur 4 va finir sa sous-étape de chauffage puis va être refroidi par le gaz de régénération non chauffé 50 via les vannes 45 et 44.

Ainsi, l'adsorbeur 1 suit avec un décalage d'un temps de phase Δϕ le même cycle de pression que l'adsorbeur 2. Il en va de même pour l'adsorbeur 2 vis-à-vis de l'adsorbeur 3, et pour l'adsorbeur 3 vis-à-vis de l'adsorbeur 4.

Chaque adsorbeur au cours du cycle suit donc successivement deux phases de production puis deux phases de régénération.

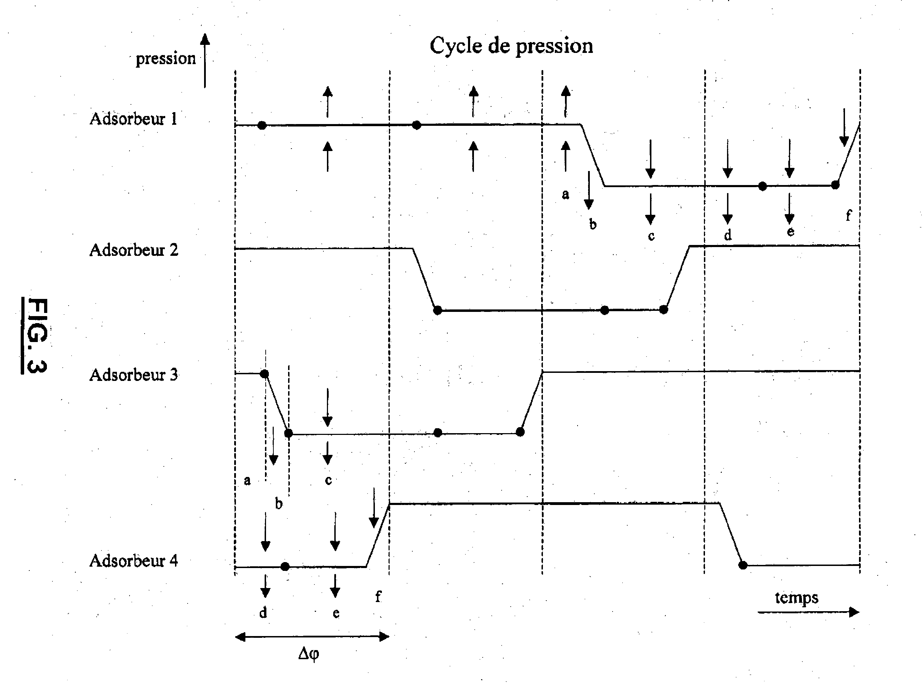

La figure 3 représente un exemple d'unité comportant 4 adsorbeurs, le cycle de pression de chacun des adsorbeurs étant représenté en fonction du temps. Le cycle comprend 4 phases et les cycles de pression de tous les adsorbeurs sont décalés les uns par rapport aux autres d'une durée xΔϕ avec 1≤ x ≤ 3 et Δϕ = T / 4, c'est à dire décalés de T / 4, 2T/ 4, ou 3T/4.

Dans cet exemple, chaque phase du cycle est représentée pour chacun des adsorbeurs. Comme indiqué précédemment, les périodes de production (adsorption) et de régénération s'effectuent chacune en deux temps de phase. Par ailleurs, la première phase de régénération comprend, d'une part, les étapes de mise en parallèle a, de dépressurisation b et de chauffage c qui s'effectuent pendant un temps de phase Δϕ et, d'autre part, une seconde phase de régénération avec une sous étape de chauffage d et des étapes de refroidissement e et de repressurisation f qui s'effectuent elles aussi pendant un temps de phase Δϕ.

Plusieurs avantages résultent de ce fonctionnement par rapport à un procédé selon l'art antérieur consistant à utiliser seulement 2 adsorbeurs ou à un procédé inspiré par exemple du traitement des gaz acides et qui comporterait 3 adsorbeurs.

Suivant l'invention, chaque adsorbeur durant la production ne voit passer que la moitié du débit d'alimentation. A durée d'adsorption fixée, il nécessitera donc moitié moins d'adsorbant et comme il s'agit d'adsorbeur radial, il sera plus que 2 fois plus petit en dimensions que l'adsorbeur unique remplissant la même fonction. Cela comme expliqué plus haut à cause des volumes morts nécessaires à assurer une bonne distribution gazeuse en présence de circulations à la fois longitudinale (ou axiale) et radiale dans ledit adsorbeur.

En reprenant l'exemple des unités traitant respectivement 200 000 et 400 000 Nm3/h, on voit que l'on peut gagner de l'ordre de 25% sur le volume global des adsorbeurs en utilisant la solution préconisée.

Ce gain sur la taille de l'adsorbeur peut être obtenu si l'on utilise un cycle comportant 3 adsorbeurs : deux adsorbeurs en adsorption et un en régénération. Par rapport au cycle standard d'épuration d'air avant séparation cryogénique, cela signifierait qu'à temps d'adsorption donnée, on puisse régénérer deux fois plus vite que dans la pratique standard. Ceci nécessiterait des débits de régénération élevés et créerait des pertes de charge tels que ce n'est pas sérieusement envisageable pour les applications courantes.

Outre le gain sur le volume global des adsorbeurs, d'autres avantages résultent de l'application de l'invention. Il est connu que la mise en production d'un adsorbeur qui vient d'être régénéré et repressurisé s'accompagne d'une élévation de la température (Δt) du gaz épuré pendant une période de quelques minutes à quelques dizaines de minutes. Ceci et les conséquences de cet échauffement sur le procédé aval sont détaillés dans le document EP-A-1347817.

En combinant des cycles identiques mais déphasés, cet effet est automatiquement limité. Ceci est notamment vrai dans l'exemple choisi et décrit sur la figure 3.

En effet, quand l'adsorbeur 1 commence sa première étape de production, l'adsorbeur 2 commence lui sa deuxième étape de production et n'est donc plus concerné depuis longtemps par cet effet de réchauffement. Le gaz épuré étant constitué à part égale de gaz issus des adsorbeurs 1 et 2, l'accroissement initial de la température n'est plus que de (Δt'= Δt/2). Le temps de mise en parallèle peut donc être récupéré pour par exemple rallonger d'autant l'étape de repressurisation, c'est-à-dire, pour une quantité de gaz de repressurisation donnée, permettre de diminuer le débit de gaz épuré ou de gaz à épurer nécessaire à cet effet. Cela permet de diminuer les fluctuations de débit et par là de moins perturber l'unité cryogénique en aval.

Ces repressurisations se passent évidemment de façon plus fréquente que dans le cycle standard mais c'est l'amplitude des variations de débit beaucoup plus que leur fréquence qui peut être gênante.

A l'inverse, comme proposé dans le cycle de la Figure 3, cela peut permettre en ajoutant une étape de mise en parallèle (a) de l'adsorbeur (3) qui termine sa deuxième phase de production de réduire encore l'effet thermique global (Δt"= Δt/3), ce qui permet des fonctionnements par exemple à pression plus élevée, donc à effet thermique plus important, qui ne seraient pas possible avec un cycle standard sauf à rajouter un réfrigérant entre la sortie de l'épuration et l'entrée de la boîte froide.

De même, on appelle phase de régénération une phase pouvant intégrée une sous étape de production correspondant par exemple à une mise en parallèle à partir du moment où cette sous étape de production est inférieure à la moitié du temps de phase Δϕ. En pratique, la sous étape de mise en parallèle est généralement inférieure à 10% du temps de phase Δϕ.

On notera que le fonctionnement étant cyclique, il est possible de choisir comme moment de début de cycle n'importe quel point du cycle et de décrire la totalité du cycle à partir de ce point en créant alors 4 phases totalement arbitraires. Ainsi, par exemple, toujours en utilisant le schéma de la figure 3, si on commence la description du cycle au milieu de la première phase de production, on obtient alors une première phase dé production, une deuxième phase comprenant une étape de production, une étape de mise en parallèle (a), une étape de dépressurisation (b) et une étape de chauffage, une troisième phase avec des étapes de chauffage et refroidissement et une quatrième et dernière phase avec la fin de l'étape refroidissement, l'étape de repressurisation et la première étape de production.

En pratique, lorsqu'on parle de cycle et de phases, il s'agit de la représentation la plus logique avec des phases de production et des phases de régénération et avec, en particulier, des fins de phase correspondant aux points clés du cycle et à des mouvements de vannes.

Avec ces 4 adsorbeurs, on peut également faire en sorte que le réchauffeur de régénération 6 soit en fonctionnement continu, ce qui, en supprimant les périodes de non fonctionnement et de déperdition thermique, est bénéfique pour la consommation énergétique et pour la tenue mécanique dudit échangeur dans le temps. Pour cela, il suffit dans le cycle de la figure 3 proposé comme exemple que l'étape de chauffage soit prolongée au cours de la phase suivant celle où le chauffage a commencé. La durée de la sous étape (d) qui continue le chauffage est telle que la durée de (c+d) corresponde à un temps de phase Δϕ. On voit dans l'exemple que cela signifie que la sous étape (d) soit égale à la somme des sous étapes correspondant à la mise en parallèle et à la dépressurisation.

La combinaison des quatre cycles de la figure 3 est donnée à titre d'exemple. Il peut être modifié sans pour autant sortir du cadre de l'invention qui consiste à utiliser pour une épuration de type TSA, c'est à dire comportant une phase où l'on désorbe au moins une partie des impuretés par circulation d'un gaz plus chaud que le gaz à épurer, une unité d'épuration comportant n adsorbeurs, avec n ≥ 4, et à leur faire suivre des cycles de durée T comportant n phases, décalés les uns par rapport aux autres d'une durée xΔϕ avec 1 ≤ x ≤ (n-1) et Δϕ = T / n.

Par exemple, la mise en parallèle peut se faire dans le même temps de phase que la repressurisation, juste après cette dernière. On peut rajouter également un temps d'attente entre la fin de la repressurisation et le début de la production.

On notera que le débit de gaz de chauffage (40) peut-être différent du débit de gaz de refroidissement (50). Ces débits peuvent être maintenus essentiellement constants pendant la durée des étapes de chauffage et de refroidissement, ou être modifiés au cours de ces mêmes étapes. Il peut par exemple être intéressant de maintenir des pertes de charge constantes à travers les adsorbeurs, ce qui revient en première approximation à augmenter les débits quand la température moyenne de l'adsorbeur est la plus froide et au contraire à les diminuer quand la température moyenne est plus chaude.

Néanmoins, si le débit de gaz résiduaire disponible pour la régénération est très important, par exemple si le produit valorisé est essentiellement l'oxygène et non l'azote, il peut maintenant devenir possible de régénérer dans un temps un peu plus court que celui retenu pour l'adsorption du fait de l'invention, c'est à dire du fait d'utiliser une pluralité (N ≥ 4) d'adsorbeurs.

Plus particulièrement, si la durée d'adsorption totale pour un adsorbeur est de 120 minutes par exemple et que l'on puisse alors dépressuriser, régénérer et repressuriser en 80 minutes, il est possible d'adopter un temps de phase de 40 minutes et d'avoir un procédé fonctionnant à 5 adsorbeurs : 3 en adsorption et 2 en régénération tout en maintenant les pertes de charge en régénération dans une fourchette encore acceptable. Chaque adsorbeur étant égal en volume à un tiers de l'adsorbeur standard qui traiterait la totalité du débit, cela revient à installer que les 5/6 du volume d'adsorbant normalement nécessaire dans le cas standard.

En effet, par rapport aux cycles utilisés comportant 3 adsorbeurs dont 2 en adsorption et un en régénération, le fait d'utiliser à présent une pluralité d'adsorbeurs permet de mieux profiter de certaines opportunités. Avec le système à 3 adsorbeurs, et toujours une durée totale d'adsorption de 120 minutes (2 fois 60minutes), l'étape de régénération doit se dérouler à présent en 60 minutes.

Suivant l'invention, toujours pour la même durée totale d'adsorption (3 fois 40 minutes), on dispose comme dit précédemment de 80 minutes (2 fois 40 minutes). Compte tenu des temps nécessaire aux dépressurisation et repressurisation et à la taille respective des adsorbeurs des cycles à 3 et 5 adsorbeurs, par exemple respectivement 20 et 10 minutes, la durée disponible impartie au chauffage et au refroidissement est en pratique largement inférieure dans le cas des 3 adsorbeurs (40 minutes dans l'exemple ci-dessus) que dans le cas des 5 adsorbeurs (70 minutes). Cette dernière solution permet donc en relatif d'utiliser des débits de régénération moindre, c'est à dire surtout de conduire à des pertes de charge nettement inférieures en régénération, même si ces dernières seront supérieures à celles que l'on obtiendrait avec une unité à 4 ou 6 adsorbeurs. Autrement dit, le fait d'utiliser une pluralité d'adsorbeurs permet éventuellement dans certains cas d'économiser 1 adsorbeur et de retenir des solutions avantageuses qui seraient impossibles de mettre en oeuvre hors du cadre de l'invention du fait de la moindre souplesse liée à un nombre réduit d'adsorbeurs.

Tous les cycles décrits sont en général gérés automatiquement par un système de contrôle-commande. Ce disposif de pilotage peut être plus ou moins élaboré et adapter par exemple les durées des étapes et/ou les conditions de régénération aux conditions de fonctionnement.

On conçoit que pour les gros débits, le choix d'installer une pluralité de petits adsorbeurs conduise à un gain appréciable.

Cette invention pourra s'appliquer par exemple à l'épuration d'air de débit supérieur à 500 000 Nm3/h, à une pression de 3 à 8 bars abs et à une température de 5 à 45°C.

En particulier, le procédé et l'installation de l'invention sont recommandés pour purifier de l'air atmosphérique avant sa distillation et séparation à température cryogénique au sein d'une unité de séparation d'air cryogénique, de manière à produire de l'azote et/ou de l'oxygène sous forme liquide, gazeuse ou autre.

## Revendications

1. Procédé de purification ou de séparation, fonctionnant en mode TSA, d'un mélange gazeux à au moins deux constituants, dans lequel on met en oeuvre n adsorbeurs radiaux avec n ≥ 4, chaque adsorbeur étant soumis à un cycle de pression de durée T donnée comprenant une période de production et une période de régénération, **caractérisé en ce que** les cycles de pression de tous les adsorbeurs sont décalés les uns par rapport aux autres d'une durée de décalage x.Δϕ avec 1≤ x ≤ (n-1) et Δϕ = T / n, et à chaque instant du cycle de pression au moins deux adsorbeurs se trouvent en phase d'adsorption.

2. Procédé selon la revendication 1, **caractérisé en ce que** périodiquement au moins trois adsorbeurs se trouvent à un instant donné en phase d'adsorption.

3. Procédé selon l'une des revendications 1 ou 2, **caractérisé en ce que** le procédé de purification met en oeuvre n adsorbeurs radiaux avec n = 4 ou n = 6 suivant un cycle comportant n/2 phases de production et n/2 phases de régénération.

4. Procédé selon l'une des revendications 1 à 3, **caractérisé en ce que** le procédé de purification met en oeuvre 5 adsorbeurs suivant un cycle comportant trois phases de production et deux phases de régénération ou deux phases de production et trois phases de régénération.

5. Procédé selon l'une des revendications précédentes, **caractérisé en ce que** l'on met en oeuvre un réchauffeur en fonctionnement continu, pendant la période de régénération d'un adsorbeur.

6. Procédé selon l'une des revendications 1 à 5, **caractérisé en ce que** la durée de chauffage pour régénérer un adsorbeur est environ égale au temps de phase Δϕ.

7. Procédé selon l'une des revendications précédentes, **caractérisé en ce que** l'on met en oeuvre pendant l'étape de chauffage de la période de régénération un débit de gaz de chauffage différent du débit de gaz de refroidissement utilisé en fin de période de régénération.

8. Procédé selon la revendication 7, **caractérisé en ce que** les débits de gaz de chauffage et/ou de refroidissement traversant un adsorbeur donné sont modifiés au cours du cycle.

9. Procédé selon l'une des revendications précédentes, **caractérisé en ce que** le temps de phase est compris entre 15 et 90 minutes.

10. Procédé selon l'une des revendications précédentes, **caractérisé en ce que** le débit volume horaire de gaz à traiter de l'unité d'adsorption est supérieur à 100 000 m³/h.

11. Procédé selon l'une des revendications précédentes, **caractérisé en ce que** la pression du gaz à traiter est comprise entre 2 et 35 bar, de préférence entre 3 et 8 bar absolu.

12. Procédé selon l'une des revendications précédentes, **caractérisé en ce que** la durée d'un cycle est comprise entre 90 et 600 minutes.

13. Procédé selon l'une des revendications précédentes, **caractérisé en ce que** le mélange gazeux est de l'air et **en ce que** le dioxyde de carbone et l'eau contenu dans l'air sont éliminés dans la période de production.

14. Procédé selon l'une des revendications 1 à 12, **caractérisé en ce que** le mélange gazeux contient majoritairement du CO₂ et au moins une impureté, en particulier de l'eau et/ou des oxydes d'azote et/ou des produits soufrés.

15. Procédé selon l'une des revendications précédentes, **caractérisé en ce que** chaque adsorbeur contient de l'alumine activée et/ou de la zéolite et/ou du gel de silice et/ou du charbon actif en tant qu'adsorbant.

16. Procédé selon l'une des revendications précédentes, **caractérisé en ce que** le gaz issu de la phase de production subit une distillation cryogénique.

17. Installation de purification et de séparation d'un mélange gazeux, comprenant n adsorbeurs radiaux avec n ≥ 4, (1) (2) (3) et (4), chaque adsorbeur fonctionnant en mode TSA et étant soumis à un cycle de pression comprenant une période de production et une période de régénération, **caractérisé en ce que** chaque adsorbeur est alimenté par une ou plusieurs canalisations (10) et (30), reliées à une source de gaz à purifier et à une source de gaz de régénération et équipées de vannes propres (11, 21, 31, 41...) dont l'ouverture et la fermeture sont pilotées à l'aide d'un dispositif de pilotage, de manière à ce que les cycles de pression de tous les adsorbeurs soient décalés les uns par rapport aux autres d'une durée de décalage x.Δϕ avec 1 ≤ x ≤ (n-1) et Δϕ = T / n, et à chaque instant du cycle de pression au moins deux adsorbeurs se trouvent en phase d'adsorption.

18. Installation selon la revendication 17, **caractérisé en ce que** la hauteur de la virole de chaque adsorbeur est supérieure à 10 mètres, de préférence comprise entre 12 et 25 mètres, et/ou **en ce que** chaque adsorbeur a un diamètre compris à 4 et 6.5 mètres.

## Patentansprüche

1. Verfahren zur Reinigung oder Trennung eines Gasgemisches mit mindestens zwei Bestandteilen im TSA-Modus, bei dem n Radialadsorber verwendet werden, wobei n ≥ 4 ist und jeder Adsorber einem Druckzyklus mit einer bestimmten Dauer T unterzogen wird, die eine Produktionsperiode und eine Regenerationsperiode umfasst, **dadurch gekennzeichnet, dass** die Druckzyklen aller Adsorber um eine Versatzdauer x.Δϕ zueinander versetzt sind, wobei 1 ≤ x ≤ (n-1) und Δϕ = T/n sind und sich in jedem Zeitpunkt des Druckzyklus mindestens zwei Adsorber in der Adsorptionsphase befinden.

2. Verfahren nach Anspruch 1, **dadurch gekennzeichnet, dass** sich regelmäßig mindestens drei Adsorber zu einem bestimmten Zeitpunkt in der Adsorptionsphase befinden.

3. Verfahren nach einem der Ansprüche 1 oder 2, **dadurch gekennzeichnet, dass** das Reinigungsverfahren n Radialadsorber einsetzt, wobei n = 4 oder n = 6 ist in einem Zyklus mit n/2 Produktionsphasen und n/2 Regenerationsphasen.

4. Vorrichtung nach einem der Ansprüche 1 bis 3, **dadurch gekennzeichnet, dass** das Reinigungsverfahren 5 Adsorber in einem Zyklus mit drei Produktionsphasen und zwei Regenerationsphasen oder mit zwei Produktionsphasen und drei Regenerationsphasen verwendet.

5. Verfahren nach einem der vorhergehenden Ansprüche, **dadurch gekennzeichnet, dass** eine Erwärmungseinrichtung im Dauerbetrieb während der Regenerationsperiode eines Adsorbers verwendet wird.

6. Vorrichtung nach einem der Ansprüche 1 bis 5, **dadurch gekennzeichnet, dass** die Erwärmungsdauer zur Regeneration eines Adsorbers etwa gleich der Phasenzeit Δϕ ist.

7. Verfahren nach einem der vorhergehenden Ansprüche, **dadurch gekennzeichnet, dass** während des Erwärmungsschrittes der Regenerationsperiode eine Heizgasmenge verwendet wird, die von der Kühlgasmenge, die am Ende der Regenerationsperiode verwendet wird, verschieden ist.

8. Verfahren nach Anspruch 7, **dadurch gekennzeichnet, dass** die Heizgasmenge und/oder die Kühlgasmenge, die einen bestimmten Adsorber durchlaufen, im Laufe des Zyklus verändert werden.

9. Verfahren nach einem der vorhergehenden Ansprüche, **dadurch gekennzeichnet, dass** die Phasenzeit zwischen 15 und 90 Minuten beträgt.

10. Verfahren nach einem der vorhergehenden Ansprüche, **dadurch gekennzeichnet, dass** der stündliche Volumenstrom des aufzubereitenden Gases der Adsorptionseinheit größer als 100.000 m³/h ist.

11. Verfahren nach einem der vorhergehenden Ansprüche, **dadurch gekennzeichnet, dass** der Druck des aufzubereitenden Gases zwischen 2 und 35 bar, bevorzugt zwischen 3 und 8 bar absolut beträgt.

12. Verfahren nach einem der vorhergehenden Ansprüche, **dadurch gekennzeichnet, dass** die Dauer eines Zyklus zwischen 90 und 600 Minuten beträgt.

13. Verfahren nach einem der vorhergehenden Ansprüche, **dadurch gekennzeichnet, dass** das Gasgemisch Luft ist und dass das in der Luft enthaltene Kohlendioxid und Wasser in der Produktionsperiode entfernt werden.

14. Vorrichtung nach einem der Ansprüche 1 bis 12, **dadurch gekennzeichnet, dass** das Gasgemisch mehrheitlich CO₂ und mindestens eine Verunreinigung, insbesondere Wasser und/oder Stickstoffoxide und/oder Schwefelprodukte, enthält.

15. Verfahren nach einem der vorhergehenden Ansprüche, **dadurch gekennzeichnet, dass** jeder Adsorber aktiviertes Aluminiumoxid und/oder Zeolith und/oder Kieselgel und/oder Aktivkohle als Adsorptionsmittel enthält.

16. Verfahren nach einem der vorhergehenden Ansprüche, **dadurch gekennzeichnet, dass** das aus der Produktionsphase hervorgegangene Gas einer Tieftemperatur-Destillation unterzogen wird.

17. Anlage zur Reinigung oder Trennung eines Gasgemisches, die n Radialadsorber umfasst, , wobei n ≥ 4, (1) (2) (3) und (4), ist und jeder Adsorber im TSA-Modus betrieben wird und einem Druckzyklus unterzogen wird, der eine Produktionsperiode und eine Regenerationsperiode umfasst, **dadurch gekennzeichnet, dass** jeder Adsorber durch eine oder mehrere Leitungen (10) und (30) gespeist wird, die mit einer Quelle des zu reinigenden Gases und mit einer Quelle des Regenerationsgases verbunden sind und mit eigenen Ventilen (11,21,31,41 usw.) versehen sind, deren Öffnung und Schließung mit Hilfe einer Ansteuervorrichtung so angesteuert werden, dass die Druckzyklen aller Adsorber um eine Versatzdauer x.Δϕ zueinander versetzt sind, wobei 1 ≤ x ≤ (n-1) und Δϕ = T/n ist und sich zu jedem Zeitpunkt des Druckzyklus mindestens zwei Adsorber in der Adsorptionsphase befinden.

18. Anlage nach Anspruch 17, **dadurch gekennzeichnet, dass** die Höhe des Mantelschusses jedes Adsorbers mehr als 10 Meter, bevorzugt zwischen 12 und 25 Meter beträgt, und/oder dass jeder Adsorber einen Durchmesser zwischen 4 und 6,5 Meter hat.

## Claims

1. Method for purifying or separating, in TSA mode, a gaseous mixture containing at least two constituents, n radial adsorbers being used where n ≥ 4, each adsorber being subjected to a pressure cycle of duration T having a production period and a regeneration period, **characterised in that** the pressure cycles of all the adsorbers are offset from one another by an offset duration x-Δϕ, where 1 ≤ x ≤ (n-1) and Δϕ = T/n, and at any moment in the pressure cycle, at least two adsorbers are in the adsorption phase.

2. Method according to claim 1, **characterised in that**, periodically, at least three adsorbers are in the adsorption phase at any moment.

3. Method according to either claim 1 or claim 2, **characterised in that** the purification method uses n radial adsorbers where n = 4 or n = 6 in a cycle having n/2 production phases and n/2 regeneration phases.

4. Method according to any of claims 1 to 3, **characterised in that** the purification method uses five adsorbers in a cycle having three production phases and two regeneration phases or two production phases and three regeneration phases.

5. Method according to any of the preceding claims, **characterised in that** a heater is used in continuous operation, during the regeneration period of an adsorber.

6. Method according to any of claims 1 to 5, **characterised in that** the duration of the heating to regenerate an adsorber is approximately equal to the phase time Δϕ.

7. Method according to any of the preceding claims, **characterised in that** use is made, during the heating step of the regeneration period, of a heating gas flow rate that differs from the cooling gas flow used at the end of the regeneration period.

8. Method according to claim 7, **characterised in that** the heating and/or cooling gas flows passing through a given adsorber are altered during the cycle.

9. Method according to any of the preceding claims, **characterised in that** the phase time is between 15 and 90 minutes.

10. Method according to any of the preceding claims, **characterised in that** the hourly volumetric flow rate, in the adsorption unit, of gas to be treated is greater than 100 000 m³/h.

11. Method according to any of the preceding claims, **characterised in that** the pressure of the gas to be treated is between 2 and 35 bar, preferably between 3 and 8 bar, absolute.

12. Method according to any of the preceding claims, **characterised in that** the duration of a cycle is between 90 and 600 minutes.

13. Method according to any of the preceding claims, **characterised in that** the gaseous mixture is air and **in that** the carbon dioxide and the water contained in the air are eliminated in the production period.

14. Method according to any of claims 1 to 12, **characterised in that** the gaseous mixture contains predominantly CO₂ and at least one impurity, in particular water and/or nitrogen oxides and/or sulphur-containing products.

15. Method according to any of the preceding claims, **characterised in that** each adsorber contains activated alumina and/or zeolite and/or silica gel and/or activated carbon as an adsorbent.

16. Method according to any of the preceding claims, **characterised in that** the gas from the production phase undergoes cryogenic distillation.

17. Installation for purifying and separating a gaseous mixture, comprising n radial adsorbers where n ≥ 4, (1) (2) (3) and (4), each adsorber operating in TSA mode and being subjected to a pressure cycle comprising a production period and a regeneration period, **characterised in that** each adsorber is fed via one or more pipes (10) and (30) which are connected to a source of gas that is to be purified and to a source of regeneration gas and which are equipped with individual valves (11, 21, 31, 41 ...), the opening and closing of which are controlled via a control device, so that the pressure cycles of all the adsorbers are offset from one another by an offset duration x-Δϕ where 1 ≤ x ≤ (n-1) and Δϕ=T/n, and at any moment in the pressure cycle, at least two adsorbers are in the adsorption phase.

18. Installation according to claim 17, **characterised in that** the height of the shell of each adsorber is greater than 10 metres, preferably between 12 and 25 metres, and/or **in that** each adsorber has a diameter of between 4 and 6.5 metres.
